# EUROPÄISCHE PATENTANMELDUNG

(11) **EP 1 596 084 A1**
(43) Veröffentlichungstag der Anmeldung: **16.11.2005**
(21) Anmeldenummer: 04011325.0
(22) Anmeldetag: 13.05.2004
(51) Int. Cl.: F16D 23/12

(54) **Ausrücker für eine Reibungskupplung eines Kraftfahrzeuges**

(71) Anmelder: ZF FRIEDRICHSHAFEN AG, 88046 Friedrichshafen (DE)
(72) Erfinder: Pagels, Olaf, 97493 Bergrheinfeld (DE)

(57) **Zusammenfassung**

Die Erfindung beschreibt einen Ausrücker (10) für eine Reibungskupplung eines Kraftfahrzeuges, mit einer aus zwei Rampenhülsen (24,26) bestehenden Rampenanordnung (12), wobei die Rampenhülsen (24,26) zueinander zugewandte axiale Laufbahnen (30) für Wälzkörper (32) aufweisen und wobei die Rampenhülsen (24,26) zumindest begrenzt zueinander relativ verdrehbar und dadurch axial zueinander verlagerbar sind. Eine der Rampenhülsen (24) trägt ein Ausrücklager (14), das Wirkverbindung zu einem Ausrückorgan (20) der Reibungskupplung herstellt. Zur Schaffung eines kompakten und montagefreundlichen Ausrückers (10) schlägt die Erfindung vor, dass die jeweils andere Rampenhülse (26) an einem zu der Reibungskupplung ortsfesten Bauteil festgelegt ist.

## Beschreibung

Die Erfindung betrifft einen Ausrücker für eine Reibungskupplung eines Kraftfahrzeuges gemäß dem Oberbegriff des Patentanspruchs 1.

Ein gattungsgemäßer Ausrücker, der über ein endseitig an diesem angeordneten Ausrücklager an einer als Ausrückorgan einer Reibungskupplung ausgebildeten Membranfeder angreifen und deren Federzungen zur Be- oder Entlastung einer Kupplungsdruckplatte schwenkbeweglich verlagern kann, ist bereits mit der DE 195 32 509 A1 bekannt geworden. Die zur Verschwenkung der Membranfederzungen notwendige Axialbewegung des Ausrücklagers wird mittels einer Rampenanordnung aus zwei konzentrisch zueinander angeordneten Rampenhülsen erzeugt, deren einander gegenseitig zugewandten Axialbereiche in Umfangsrichtung rampenförmige Laufbahnen für Wälzkörper aufweisen. Die Rampenhülsen sind mittels eines Seilzuges begrenzt zueinander relativ verdrehbar, wobei sich die das Ausrücklager tragende und der Kupplung zugewandte Rampenhülse gegenüber der anderen Rampenhülse bei einer Ausrückbewegung axial verlagern kann. Die Abstützung der Axialkraft erfolgt über ein weiteres Wälzlager, welches axial zwischen der der Kupplung abgewandten Rampenhülse und einem am Kupplungsgehäuse angeordneten Abstützelement positioniert ist.

Das beschriebene Ausrücklager weist den Nachteil auf, dass zur Axialkraftabstützung das Kupplungsgehäuse modifiziert werden muss und zusätzlich ein weiteres Kugellager notwendig ist. Zudem hat sich die Montage des Ausrückers, insbesondere die Rampenanordnung sowie die Befestigung des Seilzugmechanismus als sehr zeitaufwendig und kostenintensiv herausgestellt.

Es ist Aufgabe der vorliegenden Erfindung, einen Ausrücker für eine Reibungskupplung bereit zu stellen, der als Baueinheit vormontiert und mit wenigen Montageschritten am Fahrzeug angeordnet werden kann.

Die Erfindung löst die gestellte Aufgabe durch einen Ausrücker mit den Merkmalen des Patentanspruchs 1. Die Erfindung schlägt vor, die nichtbewegbare Rampenhülse an einem zu der Reibungskupplung ortsfesten Bauteil, beispielsweise einem Getriebegehäuse, festzulegen. Dadurch kann die aus dem Stand der Technik bekannte Konstruktion wesentlich vereinfacht werden.

Vorteilhafte Weiterbildungen und Ausgestaltungen der Erfindung sind in den abhängigen Ansprüchen 2 bis 7 beschrieben.

Im Folgenden wird die Erfindung beispielhaft anhand der beigefügten Figuren erläutert. Es zeigen:

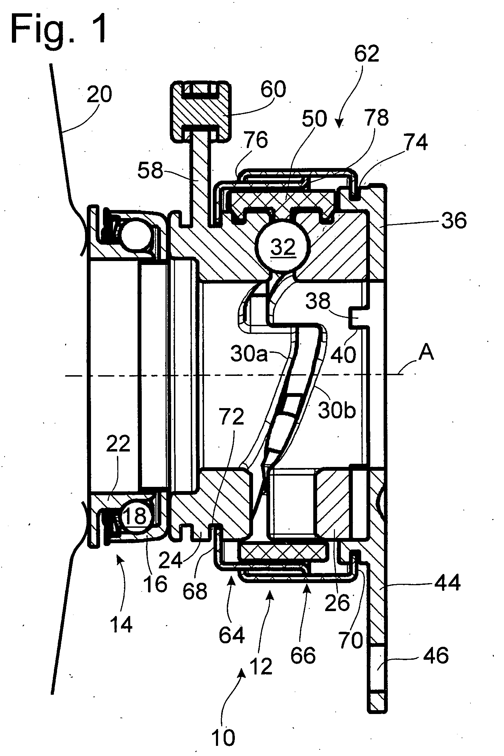

- Figur 1:: eine Axialschnittdarstellung eines erfindungsgemäßen Ausrückers,
- Figur 2:: eine Explosivzeichnung des Ausrückers der Figur 1.

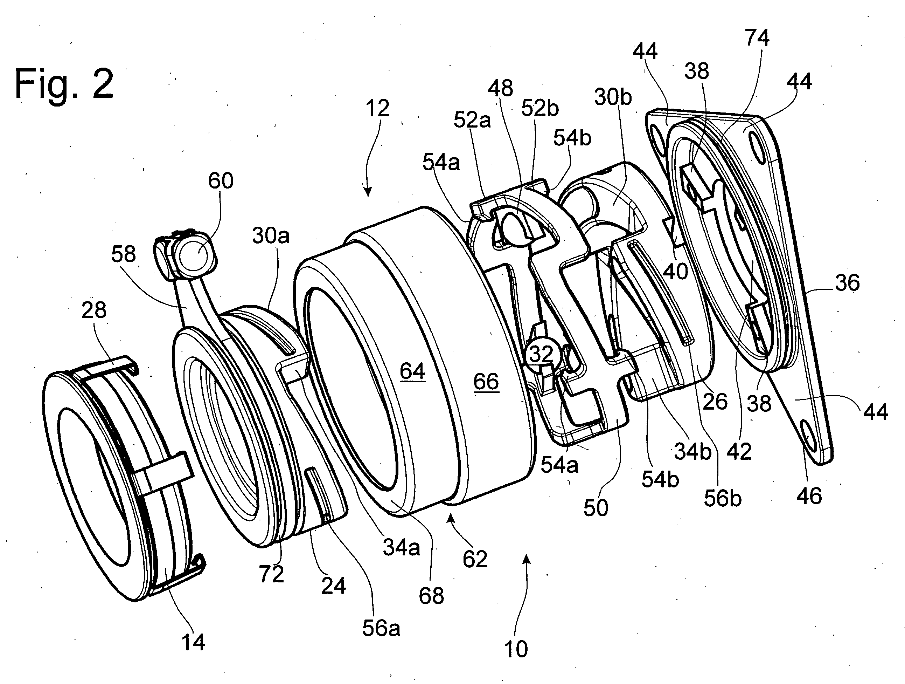

Figuren zeigen einen Ausrücker 10 einer zeichnerisch nicht dargestellten Reibungskupplung, welcher allgemein aus einer Rampenordnung 12 und einem, an dem der Kupplung zugewandten Ende angeordneten Ausrücklager 14 besteht. Das Ausrücklager 14 weist einen feststehenden, mit der Rampenanordnung 12 verbundenen Außenring 16, Wälzkörper 18 und einen mit der Kupplung umlaufenden und mit deren Betätigungsorgan 20 im Anlagekontakt stehenden Innenring 22 auf. Das Betätigungsorgan 20 ist als Membranfeder, dem Stand der Technik entsprechend ausgebildet. Die Rampenanordnung 12 umfasst zwei Rampenhülsen 24, 26, wobei die Rampenhülse 24 mit einem Halteblech 28 mit dem Ausrücklager 14 verbunden ist und wobei die einander zugewandten Axialflächen des Außenringes 16 und der Rampenhülse 24 gleitbeweglich zum Zwecke einer Selbstjustage des Ausrücklagers 14 bei einem Axialversatz der Ausrücklagerachse A zu der Rotationsachse der Reibungskupplung im Anlagekontakt stehen. Die rohrförmigen Rampenhülsen 24, 26 weisen zueinander zugewandte axiale Rampen 30a, 30b auf, die in Umfangsrichtung schräg zu einer Ebene senkrecht zur Drehachse A verlaufen, wobei zwischen den sich axial gegenüberstehenden axialen Rampen 30a, 30b Wälzkörper, beispielsweise in Form von Kugeln 32, angeordnet sind. Die Rampen 30a, 30b bilden somit Laufbahnen für die Kugeln 32. Wie insbesondere aus Figur 2 zu erkennen, sind an einer Rampenhülse 24, 26 jeweils drei Laufbahnen 30a, 30b mit einer identischen Steigung ausgebildet, welche jeweils durch einen Axialabsatz 34a, 34b voneinander getrennt sind. Die axiale Erstreckung der Axialabsätze 34a, 34b sätze 34a, 34b definiert gleichzeitig den bei einer Ausrückbewegung maximal erreichbaren Axialhub des Ausrückers 10 bzw. des Ausrücklagers 14. Die der Membranfeder 20 abgewandte Rampenhülse 26 ist drehfest an einer Trägerscheibe 36 angeordnet, welche zu diesem Zweck mehrere erhabene Radialstege 38 aufweist, die in entsprechende Radialausnehmungen 40 an der Rampenhülse 26 eingreifen. Die Trägerscheibe 36 weist des weiteren eine Zentralausnehmung 42 zum Hindurchführen einer Eingangswelle eines nicht dargestellten Getriebes auf und umfasst in deren radial äußeren Bereich eine Mehrzahl von Befestigungslaschen 44, mit denen der Ausrücker 10 über darin angeordnete Bohrungen 46 an einem ortsfesten Bauteil, beispielsweise einem Getriebe, bspw. mittels Schraubbolzen, drehfest angeordnet und abgestützt werden kann.

Die Kugeln 32 der Rampenanordnung 12 sind von Aufnahmeabschnitten 48 eines aus Kunststoff gefertigten Kugelkäfigs 50 aufgenommen und befinden sich auf derselben Axiallage, wobei jedem Laufbahnpaar 30a, 30b jeweils ein Wälzkörper 32 zugeordnet ist. Der Kugelkäfig 50 umfasst als Klammern 52a und 52b ausgebildete Haltemittel zur Verbindung mit dem Rampenhülsen 24, 26. Die Klammern 52a, 52b greifen mit nach innen gerichteten Radialvorsprüngen 54a, 54b in parallel zu den Laufbahnen 30a, 30b an den Rampenhülsen 24, 26 angeordnete Führungsnuten 56a, 56b ein, womit der Kugelkäfig 50 gegenüber den Rampenhülsen 24, 26 verdreht werden kann. Der Kugelkäfig 50 erfüllt somit eine Doppelfunktion, in dem dieser die Wälzkörper 32 zueinander in einer vorbestimmten Lage beabstandet und außerdem den Zusammenhalt der Rampenanordnung 12, bestehend aus den Rampenhülsen 24, 26 und den dazwischen angeordneten Wälzkörpern 32, sowie ggf. der mit der Rampenhülse 26 verbundenen Trägerscheibe 36 gewährleistet und auf diese Weise eine vormontierte Baueinheit bereit stellt. Der Kugelkäfig 50 kann selbstverständlich auch allein an einer der beiden Rampenhülsen 24, 26 vormontiert und zur weiteren Montage am Fahrzeug bereitgestellt werden.

Zur Realisierung einer axialen Ausrückbewegung ist an der verlagerbaren Rampenhülse 24 ein sich von dieser nach radial außen erstreckender Betätigungsarm 58 angeordnet, dessen Endbereich eine Kalotte 60 zur Übertragung einer Stellkraft eines nicht dargestellten Aktuators trägt. Die Kalotte 60 kann einstückig mit dem Betätigungsarm 58 ausgeführt oder mit Befestigungsmitteln, beispielsweise einer Niet- oder Schraub-Verbindung, an diesem angeordnet sein.

Zum Schutz vor Umwelteinflüssen, insbesondere dem Eindringen von Staub und Nässe, verfügt die Rampenanordnung 12 über einen Spritzschutz 62, welcher aus zwei koaxial ineinander geschobenen Blech- oder Kunststoffröhren 64, 66 gebildet wird, welche mit nach radial innen abgewinkelten Bereichen 68, 70 verliersicher in eine an der Trägerscheibe 36 und an der Rampenhülse ausgebildete Ringnut 72, 74 eingreifen. Die jeweils anderen axialen Endbereiche der Rohre bzw. Hülsen 64, 66 sind mit Ringkragen 76, 78 und ggf. zusätzlich mit Abstreifern gegen das Eindringen von Schmutz und Fremdkörpern gesichert.

Zur Ausführung einer Ausrückbewegung wird über den Kraftangriffspunkt 60 am Betätigungsarm 58 eine tangential oder in Umfangsrichtung wirkende Kraft auf die Rampenhülse 24 eingebracht, welche sich daraufhin gegenüber dem feststehenden Rampenring 26 in die Bildebene verdreht und wegen der axial in Umfangsrichtung ausgeführten Rampen 30a, 30b in Axialrichtung verstellen kann, wobei das Ausrücklager 14 die Kraft auf das Ausrückorgan 20 der Reibungskupplung übertragen kann. Dabei wird der in den Führungsnuten 56a, 56b geführter Kugelkäfig 15 ebenfalls radial und axial mitbewegt.

### Bezugszeichenliste

- 10: Ausrücker
- 12: Rampenanordnung
- 14: Ausrücklager
- 16: Außenring
- 18: Wälzkörper
- 20: Betätigungsorgan
- 22: Innenring
- 24, 26: Rampenhülse
- 28: Halteblech
- 30 a, 30 b: axiale Rampen
- 32: Kugeln
- 34 a, 34 b: Axialabsatz
- 36: Trägerscheibe
- 38: Radialsteg
- 40: Radialausnehmung
- 42: Zentralausnehmung
- 44: Befestigungslasche
- 46: Bohrung
- 48: Aufnahmeabschnitt
- 50: Kugelkäfig
- 52 a, 52 b: Klammer
- 54 a, 54 b: Radialvorsprung
- 56 a, 56 b: Führungsnut
- 58: Betätigungsarm
- 60: Karlotte
- 62: Spritzschutz
- 64, 66: Rohre
- 68, 70: Radialrand
- 72,74: Ringnut
- 76, 78: Ringkragen

## Patentansprüche

1. Ausrücker (10) für eine Reibungskupplung eines Kraftfahrzeuges, mit
- einer Rampenanordnung (12), umfassend 'zwei Rampenhülsen (24, 26), welche zueinander zugewandte axiale Laufbahnen (30 a, 30 b) für Wälzkörper (32) aufweisen und wobei die Rampenhülsen (24, 26) zumindest begrenzt zueinander relativ verdrehbar und **dadurch** axial zueinander verlagerbar sind,
- einem an einer der Rampenhülsen (24) koaxial angeordneten Ausrücklager (14) mit einem drehfest zu dieser Rampenhülse (24) angeordneten ersten Lagerring (16), Wälzkörpern (18) und mit einem umlaufenden zweiten Lagerring (22), der im Anlagekontakt zu einem Ausrückorgan (20) der Reibungskupplung steht,
**dadurch gekennzeichnet,**
**dass** die jeweils andere Rampenhülse (26) an einem zu der Reibungskupplung ortsfesten Bauteil festgelegt ist.

2. Ausrücker nach Anspruch 1,
**dadurch gekennzeichnet,**
**dass** die Wälzkörper (32) in einem Kugelkäfig (50) angeordnet sind.

3. Ausrücker nach Anspruch 1 oder 2,
**dadurch gekennzeichnet,**
**dass** der Kugelkäfig (50) Haltemittel (52 a, 52 b) zur Verbindung mit den Rampenhülsen (24, 26) aufweist.

4. Ausrücker nach Anspruch 3,
**dadurch gekennzeichnet,**
**dass** die Haltemittel als Klammern (52 a, 52 b) ausgebildet sind, welche in an den Rampenhülsen (24, 26) ausgebildete Führungsnuten (56 a, 56 b) eingreifen.

5. Ausrücker nach Anspruch 4,
**dadurch gekennzeichnet,**
**dass** die Führungsnuten (56 a, 56 b) parallel zu den Laufbahnen (30 a, 30 b) der Wälzkörper (32) angeordnet sind.

6. Ausrücker nach einem der bisherigen Ansprüche,
**dadurch gekennzeichnet,**
**dass** eine Rampenhülse (24, 26) eine Mehrzahl von Laufbahnen (30 a, 30 b) identischer Steigung aufweist.

7. Ausrücker nach Anspruch 4,
**dadurch gekennzeichnet,**
**dass** die verlagerbare Rampenhülse (24) einen Kraftangriffspunkt (60) für einen Aktuator aufweist.
